# EUROPEAN PATENT APPLICATION

(11) **EP 3 989 396 A2**
(43) Date of publication of application: **27.04.2022**
(21) Application number: 21204023.2
(22) Date of filing: 21.10.2021
(51) Int. Cl.: H02J 50/12, H02J 50/60, H05B 45/37

(54) **RESONANT WIRELESS POWER RECEIVER AND WIRELESS POWER TRANSMITTER WITH FOREIGN OBJECT DETECTION**

(30) Priority: 22.10.2020 US 202063094961 P; 19.10.2021 US 202117504719
(71) Applicant: Powermat Technologies Ltd., 4970602 Petach Tikva (IL)
(72) Inventor: SHERMAN, Itay, 4970602 Petach Tikva (IL); MACH, Elieser, 4970602 Petach Tikva (IL)
(74) Representative: Maiwald Patent- und Rechtsanwaltsgesellschaft mbH

(57) **Abstract**

A wireless power receiver (200) includes a coil (230) and light emitting diodes (231, 232). The coil of the wireless power receiver interacts with a magnetic field of a wireless power transmitter to wirelessly obtain induced power. The light emitting diodes of the wireless power receiver illuminate based on the induced power of the coil.

## Description

### CROSS REFERENCE TO RELATED APPLICATIONS

This application claims priority from U.S. Provisional Patent Application No. 63/094961, entitled "WIRELESS ILLUMINATION," filed on October 22,2020, which is hereby incorporated by reference as if set forth in full in this application for all purposes.

### BACKGROUND

The disclosure relates generally to wireless power systems, and more specifically, to wireless illumination.

At present, the concept of wireless illumination while generally experimented with has generally not been put to wide commercial use to date. In these experiments, so called inductive bulbs use wireless power transfer to excite a gas therein. However, there has been no action or intent to decouple these inductive bulbs from the wired power source.

In contemporary implementations of wireless power transfer methods, power can be transferred between a power transmitter (Tx) and a power receiver (Rx). The Rx is coupled to an electronic device, such as mobile handset. The Rx transfers the DC output power, received from the Tx, to the electronic device accordingly.

Thus, there is an need for a wireless illumination system that can power target electronic devices fitted for illumination.

### SUMMARY

According to one or more embodiments, a wireless power receiver is provided. The wireless power receiver includes a coil that interacts with a magnetic field of a wireless power transmitter to wirelessly obtain induced power. The wireless power receiver includes a plurality of LEDs that illuminate based on the induced power of the coil.

According to one or more embodiments, a wireless power transmitter is provided herein. The wireless power transmitter can include a coil that generates a magnetic field for a wireless power transfer to a wireless power receiver. The wireless power transmitter can include a controller that execute a foreign detection operation to determine whether a foreign object within the magnetic field.

According to one or more embodiments or any of the system embodiment herein, a system is provided. The system includes a wireless power receiver. The wireless power receiver includes a coil that interacts with a magnetic field of a wireless power transmitter to wirelessly obtain induced power. The wireless power receiver includes a plurality of LEDs that illuminate based on the induced power of the coil. The system includes a wireless power transmitter, which also includes a transmitter coil that generates the field for the wireless power transfer to the wireless power receiver and a controller.

According to one or more embodiments, the wireless power transmitter, the wireless power receiver, and the system above can be implemented as systems, methods, apparatuses, and/or a computer program product.

Additional features and advantages are realized through the techniques of the present disclosure. Other embodiments and aspects of the disclosure are described in detail herein. For a better understanding of the disclosure with the advantages and the features, refer to the description and to the drawings.

### BRIEF DESCRIPTION OF THE DRAWINGS

The subject matter is particularly pointed out and distinctly claimed in the claims at the conclusion of the specification. The forgoing and other features, and advantages of the embodiments herein are apparent from the following detailed description taken in conjunction with the accompanying drawings in which:
FIG. 1 depicts a system in accordance with one or more embodiments;
FIG. 2 depicts a diagram in accordance with one or more embodiments;
FIG. 3 depicts a diagram in accordance with one or more embodiments;
FIG. 4 depicts a method in accordance with one or more embodiments; and
FIG. 5 depicts a system in accordance with one or more embodiments.

### DETAILED DESCRIPTION

Embodiments disclosed herein may include apparatuses, systems, methods, and/or computer program products (e.g., a wireless illumination system) that power target electronic devices fitted for illumination.

Generally, a light emitting diode (LED) is an electronic component. Specifically, an LED is a type of diode that conducts current flowing in one direction and blocks current in the reverse direction. Further, an LED emits light at specific limited voltage range and has a non-linear current to voltage response (i.e., close to exponential).

For instance, to drive an LED of an existing wired LED device from main alternating current (AC) source, a driving circuit can include a rectifier (e.g., a four diode bridge) followed by rectification capacitor. The output of the driving current (of the existing wired LED device) is a direct current (DC) source at close to a peak AC voltage (e.g., 300V for a 220V AC source). The DC source is fed to a field effect transistor (FET) that is controlled by a controller (e.g., the FET may also be integrated in the controller). The FET drives an inductor connected to the LED (or multiple LEDs) and to a diode connected in reverse direction.

Further, when the FET is activated/closed, current is flowing through the inductor and the LED, the voltage gradient is positive, and the current in the inductor is increasing over time. When the current reaches a certain threshold (e.g., a threshold value), the FET is shut down. The current gradient reverses polarity. The diode starts conducting, by keeping all current flow positive and the LED active. The controller is also connected to a shunt resistor that allows the controller to sense the current flowing through the inductor and the LED. Note that by controlling a timing of the FET activation and shut down, the controller can maintain the current at a certain average level. An amount of current ripple depends on an inductor size and FET switching speed. An additional capacitor can be connected in parallel to the LED to smooth the current fluctuations.

Yet, the LED as described requires direct connections to the main alternating current (AC) source. In turn, when an illumination body including this LED is placed at any distance from a wall or celling, a wire is extended from the main alternating current (AC) source to the existing wired LED device. Wires reduce aesthetic value of the existing wired LED device. Further, with respect to installing the existing wired LED device in wet environments, wires are very problematic for sealing of the existing wired LED device and can create connection concern. In other environments and/or scenarios where a quick removal and installation of the existing wired LED device may be required, wires and direct power connections also provide drawbacks.

Thus, according to one or more embodiments, a wireless illumination system that powers target electronic devices fitted for illumination is provided herein. By way of example, the wireless illumination system provides a solution that powers an LED lighting device by a main AC power with no galvanic or physical connection between the main AC power and the LED lighting device. Further, the wireless illumination system can transmit this power over a distance that may extend up to a few meters (i.e., depending on a coil size). One or more advantages, technical effects, and/or benefits of the wireless illumination system include a low complexity and efficient solution with minimal increase in cost over existing wired LED lightning devices.

According to one or more embodiments, a wireless power receiver is provided. The wireless power receiver includes a coil that interacts with a magnetic field of a wireless power transmitter to wirelessly obtain induced power. The wireless power receiver includes a plurality of LEDs that illuminate based on the induced power of the coil.

According to one or more embodiments or any of the wireless power receiver embodiments described herein, the wireless power receiver can include a rectifier, a resonance capacitor, and a rectification capacitor.

According to one or more embodiments or any of the wireless power receiver embodiments described herein, the coil and the resonance capacitor can be connected to the rectifier and the rectification capacitor. Further, the plurality of LEDs can be connected to the rectifier and the rectification capacitor.

According to one or more embodiments or any of the wireless power receiver embodiments described herein, the plurality of LEDs can include a first LED and a second LED arranged in a first direction.

According to one or more embodiments or any of the wireless power receiver embodiments described herein, the plurality of LEDs can include a third LED and a fourth LED arranged in a second direction.

According to one or more embodiments or any of the wireless power receiver embodiments described herein, the wireless power receiver can include a resonance capacitor.

According to one or more embodiments or any of the wireless power receiver embodiments described herein, the first and second LEDs can conduct current on a first-half of a cycle and disconnect on second-half.

According to one or more embodiments or any of the wireless power receiver embodiments described herein, the third and fourth LEDs can conduct the current on a second-half of a cycle and disconnect on first-half.

According to one or more embodiments or any of the wireless power receiver embodiments described herein, the wireless power receiver can be at a distance between of 0 cm to 30 cm from the wireless power transmitter.

According to one or more embodiments or any of the wireless power receiver embodiments described herein, the coil can include folded electrical wiring copper wires or Litz wires.

According to one or more embodiments, a wireless power transmitter is provided herein. The wireless power transmitter can include a coil that generates a magnetic field for a wireless power transfer to a wireless power receiver. The wireless power transmitter can include a controller that execute a foreign detection operation to determine whether a foreign object within the magnetic field.

According to one or more embodiments or any of the wireless power transmitter embodiments described herein, the foreign object can include a metal object.

According to one or more embodiments or any of the wireless power transmitter embodiments described herein, the wireless power transmitter can continue to generate the magnetic field for the wireless power transfer when the foreign detection is not detected.

According to one or more embodiments or any of the wireless power transmitter embodiments described herein, he wireless power transmitter can cease to generate the magnetic field for the wireless power transfer when the foreign detection is detected.

According to one or more embodiments or any of the wireless power transmitter embodiments described herein, the wireless power transmitter can execute the foreign detection operation at one or more test intervals during the generation of the magnetic field for the wireless power transfer.

According to one or more embodiments or any of the wireless power transmitter embodiments described herein, one or more test intervals can include a first interval at a period of 20msec or less.

According to one or more embodiments or any of the wireless power transmitter embodiments described herein, the one or more test intervals can be imperceptible to the human eye so as to not cause a flicker on the wireless power receiver.

According to one or more embodiments or any of the system embodiment herein, a system is provided. The system includes a wireless power receiver. The wireless power receiver includes a coil that interacts with a magnetic field of a wireless power transmitter to wirelessly obtain induced power. The wireless power receiver includes a plurality of LEDs that illuminate based on the induced power of the coil. The system includes a wireless power transmitter, which also includes a transmitter coil that generates the field for the wireless power transfer to the wireless power receiver and a controller.

According to one or more embodiments or any of the system embodiment herein, the controller can execute a foreign detection operation to determine whether a foreign object within the magnetic field.

According to one or more embodiments or any of the system embodiment herein, the plurality of LEDs can include a first LED and a second LED arranged in a first direction.

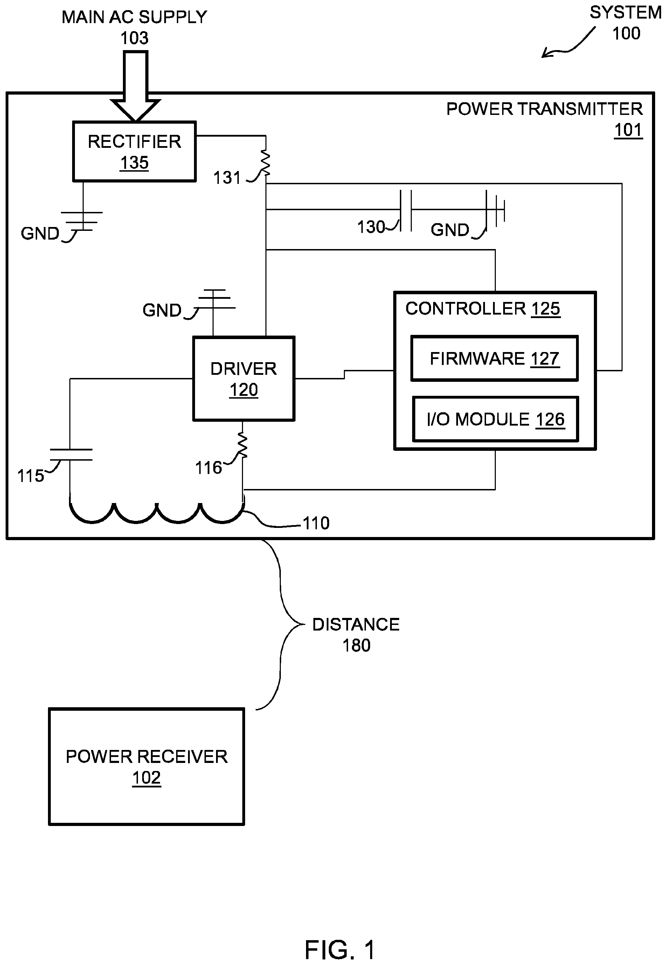

FIG. 1 shows a block diagram depicting a system 100 (e.g., a wireless illumination system) in accordance with one or more embodiments. The system 100 comprises a wireless power transmitter 101 and a wireless power receiver 102 (referred herein as Tx 101 and Rx 102, respectively). The Tx 101 is any device that can generates electromagnetic energy from a main AC supply 103 (e.g., AC power source) to a space around the Tx 101 that is used to provide power to the Rx 102. The Rx 102 is any device that can receive, use, and/or store the electromagnetic energy when present in the space around the Tx 101. Note that the Tx 101 can have a similar or the same component structure as the Rx 102, and vice versa.

As shown in FIG. 1, the Tx 101 includes circuitry for generating and transmitting the electromagnetic energy (i.e., transmitting power). The circuitry of the Tx 101 may include a transmitter coil 110; a resonant capacitor 115; a shunt resistor for AC current measurement 116; a driver 120 (e.g., half bridge or full bridge); a controller 125, which further includes an input/output (I/O) module 126 and firmware 127; a rectifier capacitor 130, a shunt resistor for DC current measurement 131; and a diode bridge rectifier 135. The coils (e.g., the transmitter coil 110) of the Tx 101 and the Rx 102 can include standard electrical wiring copper wires folded and/or Litz wires.

According to one or more embodiment, the Tx 101 includes an inductor implemented as transmitter coil 110 that is driven by a FET (e.g., the driver 120) controlled by the controller 125. For example, a topology of a single FET with a diode can be used, as well as a half bridge (e.g., 2 FETs) or full bridge (e.g., 4 FETs) driving topologies. The rectifier capacitor 130 is connected to the rectifier 135. Another side of the resonant capacitor 115 can be connected to a ground GND (i.e., for the single and dual FET topology) and to the second half of the full bridge (i.e., for the 4 FET topology). The transmitter coil 101 in the Tx 101 can be used to inductively couple to a receiving coil of the Rx 102 is connected to the resonant capacitor 115 (e.g., a serial resonance capacitor).

The transmitter coil 101 and the resonant capacitor 115 provide an LC circuit for generating an inductive current in accordance with operations of the driver 120 and the controller 125 to support power transmissions. The main AC supply 103 is rectified using the rectifier 135.

According to one or more embodiments, the rectifier 135 can be based on commercially available half-wave rectification; full-wave rectification; field-effect transistor (FET) based full-wave rectification; and any combination thereof, or the like. For example, the rectifier 135 can be any rectifier using one or more components, such as 4 diodes (e.g., asynchronous rectifier), 2 didoes and 2 FETs (half synchronous), 4FET (synchronous), or 2 capacitors and 2 switches, that are controlled by either a dedicated logic circuit or the controller 125. For instance, the rectifier 135 can be a four diode bridge or use a single diode to produce half wave rectifier. The rectifier 135 is followed by the rectifier capacitor 130.

According to one or more embodiments, the controller 125 can include a sensing circuit, circuitry, and/or software, for sensing voltage and/or current of the Tx 101. The controller 125 can control and/or communicate any part of the Tx 101 to provide modulation injections as needed for power transfer. The controller 125 can include software therein (e.g., firmware 127) that logically provides one or more of a FIR equalizer, an analyzer of in-band communication data, a selector for selecting a ping, a coupler for dynamically determining a coupling factor, a regulator for dynamically determining an operating frequency, etc. In this regard, the controller 125 can utilize a system memory and a processor, as described herein, to store and execute the firmware 127. According to one or more embodiments, the controller 125 can be utilized to perform computations required by the Tx 101 or any of the circuitry therein.

According to one or more embodiments, the controller 125 can utilize the I/O module 126 as an interface to transmit and/or receive information and instructions between the controller 125 and elements of the Tx 101 (e.g., such as the driver 120 and/or any wiring junction or shunt resistors 116 and 130). For instance, the controller 125 can include a sensing circuit, circuitry, unit, and/or software for sensing voltage and/or current of the Tx 101 (e.g., sensing voltage and/or current of the main AC supply 103 or shunt resistors 116 and 130). According to one or more embodiments, the controller 125 can sense, through the I/O module 126 one or more currents or voltages, such as a AC input voltage (Vin) and a AC resonance circuit voltage (Vac). According to one or more embodiments, the controller 125 can activate, through the I/O module 126, one or more switches to change the resonance frequency (as the Rx 102 and/or the Tx 101 can include multiple switches for multiple frequencies). According to one or more embodiments, the controller 125 can may utilize the firmware 127 as a mechanism to operate and control operations of the Tx 101. In this regard, the controller 125 can be a computerized component or a plurality of computerized components adapted to perform methods such as described herein (e.g., detection of foreign objects or FOs).

The Rx 102 includes circuitry for receiving, providing, and/or storing the electromagnetic energy, which can be further provided to a load therein. The load can be any combination of illumination components, such as LEDs and incandescent light, as well as other circuit components (e.g., resistors, capacitors, etc). According to one or more embodiments, the Rx 102 includes at least a coil configured to interact with a magnetic field of the Tx 101 to wirelessly obtain induced power and one or more LEDs (i.e., the load) that illuminate based on the induced power of the coil. The RX 102 can further include one or more capacitors for storing the induced power. The RX 102 can a controller as described herein and/or feedback circuitry to communicate with the Tx 101. The RX 102 can be located at a distance 180 from the Tx 101. The distance 180 can be selected from a range from 0 to 5 meters, based on a desired wattage in view of a generated current.

According to one or more embodiments, the system 100 can provide the Rx 101, as a light fixture, on a transparent suspension. The light fixture is a low cost device, as it does not require a controller. Further, regardless of how much the AC power is oscillating, the Tx 101 uses DC power, a typical resistance, a measure voltage, a current, and how much power the Rx 102 is supposed to use to deduce losses within the system 100. In this regard, the Tx 101 can subtract one or more of these items from an input power to deduce how much power is supposed to be provided to the Rx 102. Note that the credentials of the light fixture (i.e., the Rx 102) and the Tx 101 are known in advance (as these can be sold as a set of components for installation). In turn, watts can be delivered by the Tx 101 based on distance and current, as well as with changes in frequency or duty cycle.

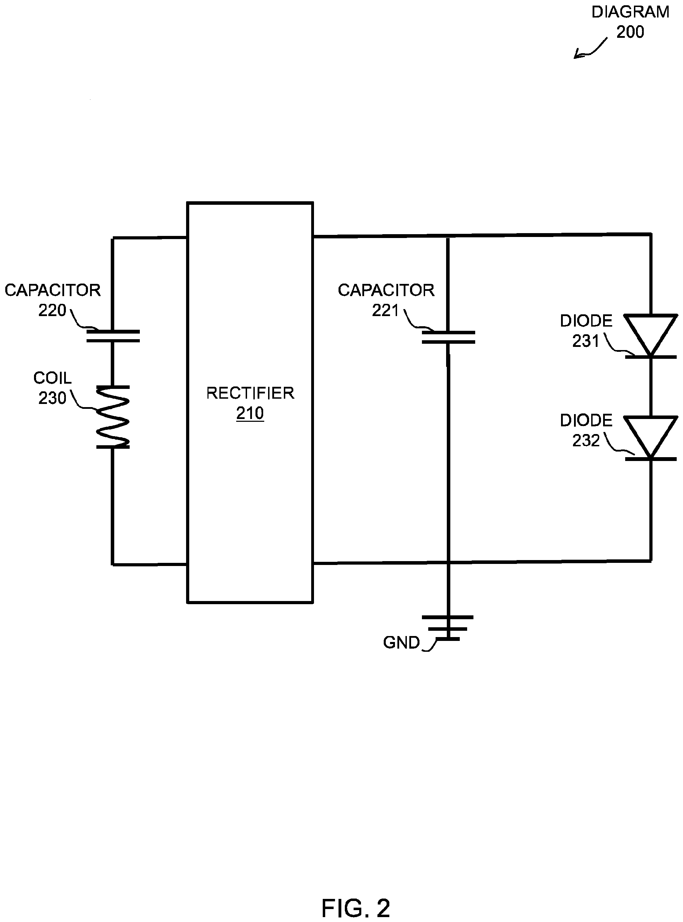

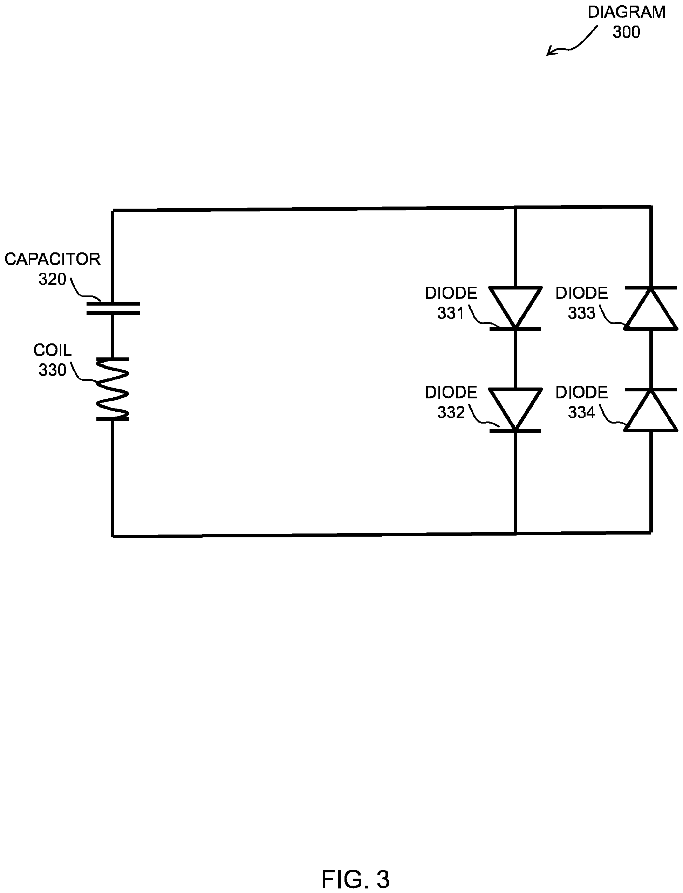

Turning now to FIGS. 2 and 3, diagrams 200 and 300 are shown in accordance with one or more embodiments.

As shown in FIG. 2, a diagram 200 of the Rx 102 includes a rectifier 210, a resonance capacitor 220, a rectification capacitor 221, a coil 230, and LEDs 231 and 232 (arrange in a first direction), with a ground GND. Note that any of the components of the diagram 200 can be reduced to one thereof or increase to more than one thereof. Further, based on different requirements of an operational environment of the Rx 102, other electrical components can be swapped in or added to the diagram 200. According to one or more embodiments, the Rx 102 may be used for powering a load, examples of which include the LEDs 231 and 232. More particularly, the Rx 102 may be used to wirelessly obtain induced power from the Tx 101 for supplying power to the LEDs 231 and 232. The coil 230 and the resonance capacitor 220 can be connected to a rectification circuit (a full wave or half wave rectifier), such as the rectifier 210 and the rectification capacitor 221, which will connect to the LEDs 231 and 232.

As shown in FIG. 3, a diagram 300 of the Rx 102 includes a resonance capacitor 320, a coil 330, LEDs 331 and 332 (arrange in a first direction), and LEDs 333 and 334 (arrange in a second direction). Note that any of the components of the diagram 300 can be reduced to one thereof or increase to more than one thereof. Further, based on different requirements of an operational environment of the Rx 102, other electrical components can be swapped in or added to the diagram 300. For example, the coil 230 and the resonance capacitor 220 can be directly connected to the LEDs 231 and 232. Note, in some embodiments, that the resonance capacitor 320 can be removed to enable the direct connection to work correctly. In this regard, during the direct connection, the LEDs 231 and 232 or a first LED chain conducts only through a half cycle (e.g., a positive half) and disconnects on another half (e.g., a negative half). Further, the LEDs 331 and 332 or a second LED chain conducts according to reverse polarity (the second LED chain conducts on the negative half of the cycle). Thus, the diagram 300 provides a balanced response to the transmission of power from the Tx 101.

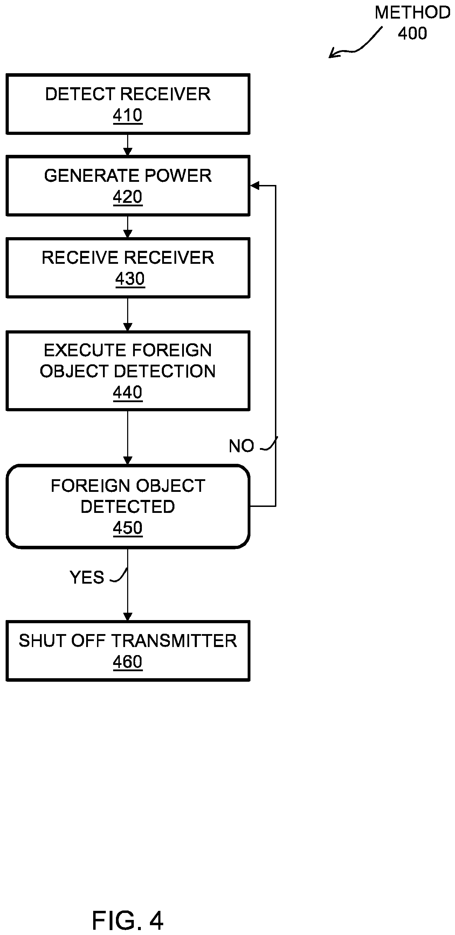

Turning to FIG. 4, one or more operations of the system 100 are described with respect to a method 400 in accordance with one or more embodiments.

The method 400 begins at block 410, wherein the Tx 101 detects the Rx 102. At block 420, the Tx 101 generates power for the Rx 102. For example, the controller 125 of the Tx 101 (e.g., on a main transmitting side) measures a current (AC current) flowing in the transmitter coil 110 as well as an input current (DC current) to the rectifier capacitor 130. For instance, the controller 125 measures a voltage drop using the using one or more of the shunt resistors 116 and 131. The controller 125 can, further, switch one or more FETs (e.g., the driver 120) to achieve specific conditions on the DC and AC currents measured. The controller 125 increases the AC current flow, when the DC current is below a defined target value and the AC current is below a max current value. The defined target current value can be modified by user using an external variable resistor or by commands of the controller 125 (e.g., to achieve a functionality of a dimmer and control level of illumination). The controller 125 can also decrease the AC current flow when the DC current is above the defined target value or AC current is above the maximal current value.

According to one or more embodiments, the defined target value of DC current can be modified according to the AC current to compensate for internal losses of the Tx 101. As an example, assume the Rx 102 (e.g., a target illumination device) is a first device, such as a 60W RMS device, that receives an input voltage. For instance, an input voltage for 220AC RMS supply can be 300V peak, so that the defined target value is set to a value along a range of 10mA to 1000ma (e.g., 200mA). Note, however, the transmitter coil 110 (and circuit) may have a typical resistance, such as 1ohm. Thus, when operating with the Rx 102 installed at a distance of 30cm (e.g., the distance 180), the AC RMS current levels can be 4A, the losses of the Tx 101 can therefore be evaluated at 4^2*1=16W, for 300V, which translates to 53mA. The defined target value is therefore adjusted to a higher value (e.g., 253mA).

According to one or more embodiments, when the Rx 102 (e.g., a target illumination device) is installed at 20cm distance (e.g., the distance 180), the AC current can be 3A and the power loss can be 9W, which is equivalent to 30mA. The threshold value is therefore set to 230mA. The controller 125 can achieve an increase or decrease of the AC current by modifying a frequency of FET, thereby toggling and/or changing the active cycle duty cycle. The minimal and maximal AC and DC current values, as well as a Tx 101 resistance may be stored in the controller 125 (e.g., in non-volatile memory or fixed in circuit thereof). For instance, these values can be modified as part of factory calibration of the Tx 101. According to one or more embodiments, these values of these parameters can be coded in a value of external resistors connected to the controller 125. Further, a subset of the parameters can use any of the storage/calibration options described herein.

At block 430, the Rx 102 receives the power from the Tx 101. In this regard, the load of the Rx 102 illuminates.

At block 440, the Tx 101 executes a foreign detection operation. In turn, at decision block 450, the Tx 101 determines whether a foreign object is detected. A foreign object can be any metal object or the like that interfere with the inductive power transfer of the system 100.

According to one or more embodiments, the controller 125 evaluates whether a foreign object reacting with a magnetic field of the Tx 101 is in a proximity of the Rx 102 or the Tx 103. For instance, the controller 125 compares a DC current draw on multiple operation points (within the Tx 101). By way of example, the controller 125 can specifically identify when a low power operation point is used. As explained herein, an LED has a non-linear response and hardly conducts for voltages that are below a certain threshold. If the controller 125 manages a transmitter current to a level that is known to induce relatively low voltage on the Rx 102 (for all its possible installation distances), the LEDs of the Rx 102 will not conduct making an overall consumption of the Rx 102 close to 0. The DC current level of the Tx 101, in turn, reflects only internal losses. As these internal losses can be measured, as part of factory calibration or initial calibration, any significant increase above (e.g., significant increase in losses) would imply that there are additional elements (FOs) in the magnetic field that consume the extra power. A factory calibration value can be stored in non-volatile memory of the controller 125, or may be coded in a value of external resistor connected to the controller 125. The controller 125 can test for FOs, when turning a light on (e.g., illuminating the Rx 102), as it may pass through a known calibrated operational point.

According to one or more embodiments, the controller 125 can also perform a test for FOs periodically by introducing test intervals or lower power transmission. The test intervals can may be shorter than a response of a human eye (i.e., a period of 20msec or less). The Rx 102 can include enough capacitance on a rectification circuit (if the Rx 102 includes one) to sustain light emission for the duration of a halt period (e.g., which can be equal to the test interval). If a FO is detected, the controller 125 can cease power transfer and indicate an error. Error indication can be based on a UI on the Tx 101 or by the Tx 101 using a receiving lightning feature (e.g., flashing shortly before shutting down power completely).

Thus, if a foreign detection is not detected (as indicated by the 'NO' arrow), the method 400 returns to block 420, where the Tx 101 continues to generate power for the Rx 102. If a foreign detection is detected (as indicated by the 'YES' arrow), the method 400 proceeds to block 460, where the Tx 101 shuts off. The foreign object operation of block 440 can be executed at during operation of the Rx 102 (i.e., while being illuminated) and with respect to the test intervals that are imperceptible to the human eye (e.g., the illumination does not flicker).

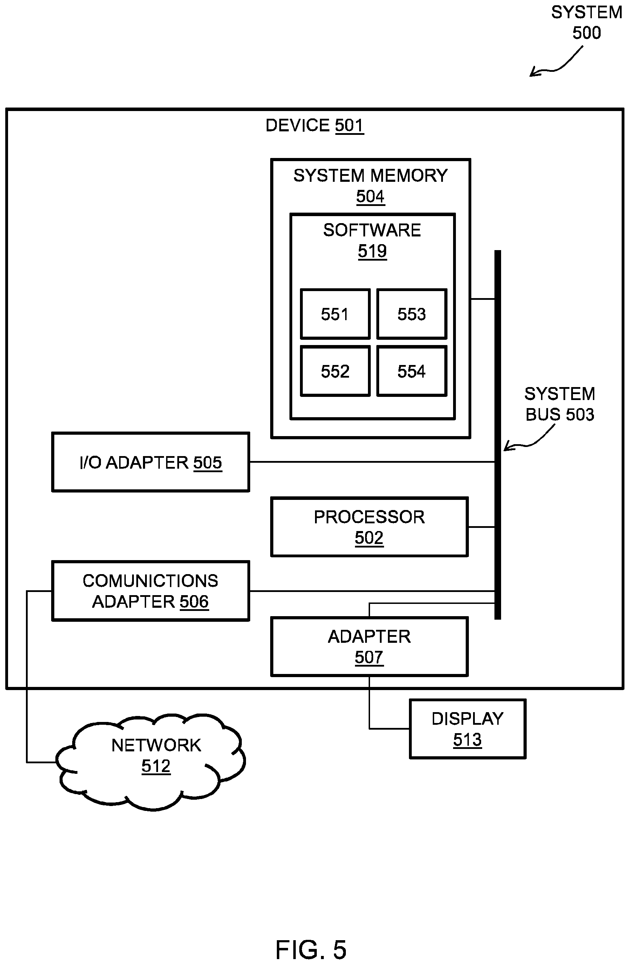

FIG. 5 depicts a system 500 in accordance with one or more embodiments. The system 500 has a device 501 (e.g., the Rx 102 and/or the Tx 101 of the system 100 of FIG. 1) with one or more central processing units (CPU(s)), which are collectively or generically referred to as processor(s) 502 (e.g., the controllers 135 and 180 of FIG. 1). The processors 502, also referred to as processing circuits, are coupled via a system bus 503 to system memory 504 and various other components. The system memory 504 can include a read only memory (ROM), a random access memory (RAM), internal or external Flash memory, embedded static-RAM (SRAM), and/or any other volatile or non-volatile memory. For example, the ROM is coupled to the system bus and may include a basic input/output system (BIOS), which controls certain basic functions of the device 501, and the RAM is read-write memory coupled to the system bus 503 for use by the processors 502.

FIG. 5 further depicts an I/O adapter 505, a communications adapter 506, and an adapter 507 coupled to the system bus 503. The I/O adapter 505 may be a small computer system interface (SCSI) adapter that communicates with a drive and/or any other similar component. The communications adapter 506 interconnects the system bus 503 with a network 512, which may be an outside network (power or otherwise), enabling the device 501 to communicate data and/or transfer power with other such devices (e.g., such as the Tx 101 connecting to the Rx 102). A display 513 (e.g., screen, a display monitor) is connected to the system bus 503 by the adapter 507, which may include a graphics controller to improve the performance of graphics intensive applications and a video controller. Additional input/output devices cab connected to the system bus 503 via the adapter 507, such as a mouse, a touch screen, a keypad, a camera, a speaker, etc.

In one embodiment, the adapters 505, 506, and 507 may be connected to one or more I/O buses that are connected to the system bus 503 via an intermediate bus bridge. Suitable I/O buses for connecting peripheral devices such as hard disk controllers, network adapters, and graphics adapters typically include common protocols, such as the Peripheral Component Interconnect (PCI).

The system memory 504 is an example of a computer readable storage medium, where software 519 can be stored as instructions for execution by the processor 502 to cause the device 501 to operate, such as is described herein with reference to FIGS. 1-4. In connection with FIG. 1, the software 519 can be representative of firmware 190 for the Tx 101, such that the memory 504 and the processor 502 (e.g., the controller 180) logically provide a FIR equalizer 551, an analyzer 552 of in-band communication data, a selector for selecting a ping, a coupler 553 for dynamically determining a coupling factor, a regulator 554 for dynamically determining an operating frequency, etc.

As indicated herein, embodiments disclosed herein may include apparatuses, systems, methods, and/or computer program products at any possible technical detail level of integration. The computer program product may include a computer readable storage medium (or media) having computer readable program instructions thereon for causing a controller to carry out aspects of the present invention.

The computer readable storage medium can be a tangible device that can retain and store computer readable program instructions. The computer readable storage medium may be, for example, but is not limited to, an electronic storage device, a magnetic storage device, an optical storage device, an electromagnetic storage device, a semiconductor storage device, or any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

The computer readable program instructions described herein can be communicated and/or downloaded to respective controllers from an apparatus, device, computer, or external storage via a connection, for example, in-band communication. Computer readable program instructions for carrying out operations of the present invention may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

The flowchart and block diagrams in the drawings illustrate the architecture, functionality, and operation of possible implementations of apparatuses, systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the flowchart and block diagrams in the drawings. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used herein, specify the presence of stated features, integers, steps, operations, elements, and/or components, but do not preclude the presence or addition of one more other features, integers, steps, operations, element components, and/or groups thereof.

The descriptions of the various embodiments herein have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A wireless power receiver comprising:
a coil configured to interact with a magnetic field of a wireless power transmitter to wirelessly obtain induced power;
a plurality of light emitting diodes (LEDs) configured to illuminate based on the induced power of the coil.

2. The wireless power receiver of claim 1, wherein the wireless power receiver comprises a rectifier, a resonance capacitor, and a rectification capacitor.

3. The wireless power receiver of claim 1, wherein the coil and the resonance capacitor are connected to the rectifier and the rectification capacitor, and
wherein the plurality of LEDs are connected to the rectifier and the rectification capacitor.

4. The wireless power receiver of claim 1, wherein the plurality of LEDs comprises a first LED and a second LED arranged in a first direction.

5. The wireless power receiver of claim 4, wherein the plurality of LEDs comprises a third LED and a fourth LED arranged in a second direction.

6. The wireless power receiver of claim 5, wherein the wireless power receiver comprises a resonance capacitor.

7. The wireless power receiver of claim 5, wherein the first and second LEDs conducts current on a first-half of a cycle and disconnect on second-half.

8. The wireless power receiver of claim 7, wherein the third and fourth LEDs conducts the current on a second-half of a cycle and disconnect on first-half.

9. The wireless power receiver of claim 1, wherein the wireless power receiver is at a distance between of 0 cm to 30 cm from the wireless power transmitter.

10. The wireless power receiver of claim 1, wherein the coil comprises folded electrical wiring copper wires or Litz wires.

11. A wireless power transmitter comprising:
a coil configured to generate a magnetic field for a wireless power transfer to a wireless power receiver;
a controller configured to execute a foreign detection operation to determine whether a foreign object within the magnetic field.

12. The wireless power transmitter of claim 11, wherein the foreign object comprises a metal object.

13. The wireless power transmitter of claim 11, wherein the wireless power transmitter continues to generate the magnetic field for the wireless power transfer when the foreign detection is not detected.

14. The wireless power transmitter of claim 11, wherein the wireless power transmitter ceases to generate the magnetic field for the wireless power transfer when the foreign detection is detected.

15. The wireless power transmitter of claim 11, wherein the wireless power transmitter executes the foreign detection operation at one or more test intervals during the generation of the magnetic field for the wireless power transfer.
